# EUROPÄISCHE PATENTANMELDUNG

(11) **EP 2 862 442 A1**
(43) Veröffentlichungstag der Anmeldung: **22.04.2015**
(21) Anmeldenummer: 13004956.2
(22) Anmeldetag: 16.10.2013
(51) Int. Cl.: A01N 31/06, A01N 35/02, A01N 49/00, A01P 17/00

(54) **Insektenabwehrmittel**

(71) Anmelder: Fulltec GmbH, 5020 Salzburg (AT)
(72) Erfinder: Schöftner, Rainer, 4400 Steyr (AT)
(74) Vertreter: Grünecker Patent- und Rechtsanwälte PartG mbB

(57) **Zusammenfassung**

Die vorliegende Erfindung betrifft eine Zusammensetzung, umfassend mindestens ein Monoterpenoid, mindestens eine Säure und mindestens einen Emulgator, wobei der Emulgator in mindestens 2 Gew.-%, bezogen auf die Gesamtzusammensetzung, enthalten ist, ein Insektenabwehrmittel, umfassend die Zusammensetzung, ein Verfahren zur Herstellung der Zusammensetzung und die Verwendung der Zusammensetzung als Insektenabwehrmittel.

## Beschreibung

Die vorliegende Erfindung betrifft ein Insektenabwehrmittel (Repellent) gegen fliegende, stechende, beißende und saugende Insekten (z. B. Mücken, Läuse, Bremsen und Wespen) sowie Lästlinge der Gattung Acarina (Milben und Zecken).

Repellentien sind chemische Substanzen, die auf Insekten und Acarina abstoßend wirken. Große praktische Bedeutung hat ihre Anwendung in der Human- und Veterinärhygiene, wo sie Mensch und Tier vor Befall mit blutsaugenden, stechenden, beißenden und damit nicht nur lästigen, sondern auch potentiell krankheitsübertragenden (z. B. Malaria, FSME, Lyme-Borreliose) Schädlingen schützen. Bei unmittelbar auf die Haut aufzutragenden Repellentien ist es erforderlich, dass sie hautverträglich, ungiftig, schweiß- und lichtecht und in kosmetischer, damit äußerlich nicht hautbeeinträchtigender (Austrocknung, Faltenbildung) und pharmakologisch-gesundheitlicher (Irritationen, Penetration in tiefere Hautschichten und in den Blut- und Lymphkreislauf) Hinsicht einwandfrei sind. Außerdem soll der Schutz der behandelten Hautpartien oder der Schutz von Mensch und Tier durch behandelte Umgebungsgegenstände möglichst lange Zeit anhalten und die Wirkungsbreite der Repellentien möglichst groß sein, d. h. sie sollen gegen möglichst viele, unterschiedliche Schädlinge und Lästlinge wirken.

In der Vergangenheit und in geringerem Maße bis heute wurden und werden etherische Öle, wie Citronell- und Lemongras-, sowie Nelken-, Lavendel- und Eukalyptusöl, sowie Campher als Repellentien eingesetzt, die aber allesamt folgende Nachteile aufweisen:
- bedenkliche Inhaltsstoffe, wie z. B. Eugenol in Nelkenöl, das im Experiment als carcinogen, mutagen und hautreizend befunden wurde, oder Cineol im Öl aus Eucalyptus globulus, das auf der Haut im Stande ist, heftig juckende Exantheme hervorzurufen,
- nur kurzzeitige Wirksamkeit, da die etherischen Öle allesamt schnell durch die Körpertemperatur von der Hautoberfläche abdunsten und damit häufige Nachbehandlungen notwendig sind, um den Schutz zu gewährleisten,
- fehlende Lichtechtheit und damit die permanente Gefahr von Photosensibilisierung und Produktveränderungen bereits vor Anwendung.

In der jüngeren Vergangenheit wurden sie dadurch überwiegend durch sogenannte synthetische Repellentien ersetzt. Im Stand der Technik angewandte synthetische Repellentien sind z. B. Phthalsäuredimethylester, 1,2-Ethylhexan-1,3-diol, 3,4-Dihydro-2,2-dimethyl-4-oxo-2H-pyran-6-carbonsäure-n-butylester, Bernsteinsäuredipropylester, N,N-Diethyl-3-methyl-benzamid (DEET, auch N,N-Diethyl-m-toluamid) und Pyridin-2,5-dicarbonsäure-di-n-propylester (Ullmanns Encyclopädie der techn. Chemie, 4. Auflage, Bd. 13, S. 237 ff., 1977). In letzter Zeit wird verstärkt Hydroxyethyl-butylpiperidincarboxylat [1-Piperidincarboxylsäure-2-(2-hydroxyethyl)-1-methylpropylester], 3-[N-butyl-N-acetyl]-aminopropionsäureethylester (IR3535^{®}) oder 1-Piperidincarbonsäure (Icaridin^{®}) eingesetzt (B.W. Bissinger et.al., Pesticide Biochemistry and Physiology 96 (2010) 63-79).

Häufig sind diese synthetischen Repellentien jedoch nicht schweißbeständig, reizen die Schleimhäute und sind ebenso imstande, durch die oberste Hautschicht zu penetrieren und sich damit im Körper zu akkumulieren, wobei die daraus resultierenden Nebenwirkungen noch nicht vollständig erforscht sind, aber berechtigter Verdacht auf schädliche Auswirkungen nahegelegt ist.

Die WO-A-03/011805 betrifft Insektenabwehrmittel, die eine hydratisierte Verbindung eines Monoterpenoids in Verbindung mit einer C₆-C₁₃ Carbonsäure enthalten. Diese Zusammensetzungen besitzen allerdings nur eine geringe Wasserlöslichkeit und sind daher schlecht formulierbar.

Die WO-A-2004/039158 beschreibt Acetale bzw. Halbacetale aus acyclischen Terpenen und deren Verwendung als Insektenabwehrmittel. Acetale sind jedoch nur bedingt (säure)stabil und können daher leicht wieder gespalten werden.

Die EP-A-2439188 beschreibt Derivate von para-Menthan-3,8-diol (PMD) und deren Verwendung als Insektenabwehrmittel. In den darin beschriebenen PMD-Derivaten ist der Wasserstoff der Ring-OH-Gruppe durch eine Alkyl- oder Acylgruppe substituiert. Die so erhaltenen PMD-Derivate weisen eine hohe Wasserlöslichkeit auf, sind aber eben aufgrund dieser hohen Wasserlöslichkeit weniger schweißbeständig.

Die WO-A-2009/034352 beschreibt ebenfalls Insektenabwehrmittel auf der Basis von PMD, sowie ein Herstellungsverfahren von PMD aus Citronellal. Dabei wird Citronellal mit Hilfe einer Säure und in Gegenwart eines Phasentransferkatalysators umgesetzt. Allerdings werden bei dieser Reaktion neben PMD noch weitere Nebenprodukte wie PMD-Citronellalacetal gebildet.

B. Mpuhlu, Synthesis of p-Menthane-3,8-diol, Nelson Mandela Metropolitan University, 2007 beschreibt verschiedene Synthesewege von PMD, unter anderem ausgehend von Citronellal. Die Synthese erfolgt in Gegenwart einer Säure als Katalysator. Auch bei dieser Reaktion werden neben PMD noch Nebenprodukte gebildet.

Die WO-A-2011/161426 betrifft Insektenabwehrmittel, die ebenfalls PMD enthalten. Allerdings ist auch in diesen Zusammensetzungen PMD-Citronellalacetal enthalten.

Kunz et al., Chemistry & Biodiversity 2009, 6, 934-947 untersuchten Insektenabwehrmittelformulierungen, die PMD und eine oberflächenaktive Substanz enthalten. Allerdings enthalten die beschriebenen Formulierungen eine erhebliche Menge an Isopropanol, was zu Hautreizungen führen kann.

Kunz et al., Comptes Rendus Chimie 2011, 14, 629-635 untersuchten die Synthese von PMD aus Citronellal durch eine Prins Reaktion. Dabei setzten sie Eucalyptus citriodora Öl mit Citronensäure um und erhielten ein Gemisch aus cis und trans Isomeren von PMD neben weiteren Verbindungen. Das erhaltene Gemisch hatte allerdings eine kürzere Schutzwirkung als eine Zusammensetzung mit 20 Gew.-% reinem PMD oder 20 Gew.-% DEET als Wirkstoff. Des weiteren wurde als Lösungsmittel Isopropanol verwendet.

Demgemäß liegt der vorliegenden Erfindung die Aufgabe zugrunde, eine Zusammensetzung zur Verfügung zu stellen, die geeignet ist als wirksames Insektenabwehrmittel für den Auftrag direkt auf die Haut, und/oder die Kleidung und/oder andere, den sich schützenwollenden Anwender umgebende Gegenstände und Materialien (Bettwäsche, Tischdecken etc.) auf Basis natürlicher und naturidentischer Rohstoffe mit geringstem toxikologischen Risiko, die außerdem über einen möglichst langen Zeitraum hinweg stabil ist und eine hohe Wirksamkeit entfaltet.

Diese Aufgabe wird gelöst durch eine Zusammensetzung, umfassend mindestens ein Monoterpenoid, mindestens eine Säure und mindestens einen Emulgator, wobei der Emulgator in mindestens 2 Gew.-%, bezogen auf die Gesamtzusammensetzung, enthalten ist.

Weiterhin wird die Aufgabe der vorliegenden Erfindung durch ein Insektenabwehrmittel gelöst, umfassend die erfindungsgemäße Zusammensetzung, durch ein Verfahren zur Herstellung der erfindungsgemäßen Zusammensetzung, umfassend das Vermischen der Bestandteile, sowie durch die Verwendung der erfindungsgemäßen Zusammensetzung als Insektenabwehrmittel.

### Beschreibung der Figuren

Figur 1 zeigt beispielhaft die Umsetzung von Citronellal im Ein-Topf-Verfahren in Gegenwart von Citronensäure.
Figur 2 zeigt die Umsetzung von Citronellal im Ein-Topf-Verfahren bei verschiedenen Temperaturen.
Figur 3 zeigt den Konzentrationsverlauf der gebildeten cis- und trans-p-Menthan-3,8-diole (cis-/trans-PMD) während der Reaktion der Ansätze 1 bis 3.
Figur 4 zeigt den Konzentrationsverlauf der gebildeten Acetale während der Reaktion der Ansätze 1 bis 3.
Figur 5 zeigt die Umsetzung von Citronellal im Vergleich mit Eucalyptus citriodora Öl bei 72°C.
Figur 6 zeigt die Bildung von cis- und trans-p-Menthan-3,8-diol während Umsetzung von Citronellal und Eucalyptus citriodora Öl bei 72 °C.
Figur 7 zeigt den Gehalt an Acetalen in Abhängigkeit der Temperatur.
Figur 8 zeigt den Umsatz von Eucalyptus citriodora Öl nach 6 Stunden in Abhängigkeit der verwendeten Säure.
Figur 9 zeigt die Produktzusammensetzung in Abhängigkeit der verwendeten Säure.
Figur 10 zeigt den Gehalt an Acetalen in Abhängigkeit der verwendeten Säure.
Figur 11 zeigt das Verhältnis von cis- und trans-p-Menthan-3,8-diol in Abhängigkeit der verwendeten Säure.
Figur 12 zeigt die Produktzusammensetzung in Abhängigkeit des verwendeten Emulgators.
Figur 13 zeigt das Verhältnis von cis- und trans-p-Menthan-3,8-diol in Abhängigkeit des verwendeten Emulgators.

### Detaillierte Beschreibung der Erfindung

Die vorliegende Erfindung betrifft eine Zusammensetzung, umfassend mindestens ein Monoterpenoid, mindestens eine Säure und mindestens einen Emulgator, wobei der Emulgator in mindestens 2 Gew.-%, bezogen auf die Gesamtzusammensetzung, enthalten ist.

Die vorliegende Erfindung betrifft außerdem ein Insektenabwehrmittel, umfassend die erfindungsgemäße Zusammensetzung, ein Verfahren zur Herstellung der erfindungsgemäßen Zusammensetzung, umfassend das Vermischen der Bestandteile, sowie die Verwendung der erfindungsgemäßen Zusammensetzung als Insektenabwehrmittel.

Überraschenderweise stellt die vorliegende Erfindung eine stabile alkoholfreie Zusammensetzung und ein stabiles alkoholfreies Insektenabwehrmittel bereit, die auf Grund ihres fehlenden Reiz- und Hautaustrocknungspotentials, wie es bei Aufbringung von Alkoholen auf die Haut latent ist, sehr gut für Verwender mit Problemhaut und für Kleinkinder geeignet sind.

Unter Monoterpenoiden versteht man erfindungsgemäß Dimerisierungsprodukte des Isoprens (2-Methyl-1,3-butadien, C₅H₈), die ein C₁₀-Grundgerüst haben. Monoterpenoide können acyclisch, mono- und bicyclisch sein.

Bevorzugte Monoterpenoide sind Citronellal oder ein Isomer davon und ein p-Menthenol oder ein Isomer davon. Als p-Menthenol wird bevorzugt Isopulegol oder ein Isomer davon oder p-Menthan-3,8-diol verwendet. Weitere Beispiele für p-Menthenole sind z. B. dargestellt im RÖMPP Lexikon Naturstoffe, 1997, S. 393.

(±)-Citronellal [(±)-3,7-Dimethyl-6-octanal] hat folgende Formel:

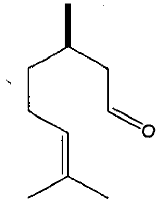

(±)-Isopulegol [2-Isopropenyl-5-methyl-cyclohexanol] hat folgende Formel:

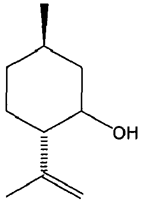

Die Monoterpenoide können als etherisches Öl durch Wasserdampfdestillation aus den Blättern von Eucalyptus citriodora, z. B. Eucalyptus citriodora Hook (Hauptbestandteile: 70 bis 90% Citronellal und Isopulegol) gewonnen werden.

Ebenso möglich ist die Verwendung von synthetisch aus Geraniol, Nerol, Citronellol und/oder Citral hergestelltem Citronellal und dem daraus nach bekannten Methoden der Parfumgrundstoffindustrie isomerisierten Isopulegol. Ferner können auch Gemische aus Citronellal und Eucalyptus citriodora Öl verwendet werden.

In einer bevorzugten Ausführungsform in Verbindung mit einer der oben oder unten genannten Ausführungsformen ist das Monoterpenoid Citronellal, ein para-Menthenol oder ein Isomer davon, besonders bevorzugt Isopulegol, hydratisiertes Isopulegol, hydratisiertes Citronellal oder ein para-Menthan-3,8-diol, insbesondere Citronellal.

In einer weiteren bevorzugten Ausführungsform in Verbindung mit einer der oben oder unten genannten Ausführungsformen ist das Monoterpenoid in der erfindungsgemäßen Zusammensetzung in einer Menge von 5 bis 70 Gew.-%, besonders bevorzugt 10 bis 60 Gew.-%, insbesondere 25 bis 50 Gew.-%, bezogen auf die Gesamtzusammensetzung, enthalten.

Die erfindungsgemäße Zusammensetzung enthält außerdem mindestens eine Säure. In einer weiteren bevorzugten Ausführungsform in Verbindung mit einer der oben oder unten genannten Ausführungsformen ist die Säure eine Carbonsäure, besonders bevorzugt eine C₁-C₁₀ Carbonsäure, insbesondere eine C₂ Carbonsäure, C₃ Carbonsäure, C₄ Carbonsäure, C₅ Carbonsäure oder C₆ Carbonsäure. Vorzugsweise ist die Säure eine Hydroxycarbonsäure, insbesondere eine α-Hydroxycarbonsäure, eine Dicarbonsäure oder eine Tricarbonsäure.

Übliche geeignete Carbonsäuren sind beispielsweise:
C₁ Carbonsäuren: Ameisensäure;
C₂ Carbonsäuren: Oxalsäure, Glycolsäure, Essigsäure;
C₃ Carbonsäuren: Malonsäure, Dihydroxymalonsäure, Mesoxalsäure, Tartronsäure, Milchsäure, Brenztraubensäure;
C₄ Carbonsäuren: Asparaginsäure, Äpfelsäure, Maleinsäure, Weinsäure, Bernsteinsäure, Fumarsäure, Oxalessigsäure;
C₆ Carbonsäuren: Adipinsäure, Ascorbinsäure, Citronensäure, Gluconsäure, Sorbinsäure;
C₇ Carbonsäuren: Salicylsäure, Benzoesäure.

Besonders bevorzugt enthält die erfindungsgemäße Zusammensetzung Citronensäure, Milchsäure oder Weinsäure.

Alternativ kann die Säure der erfindungsgemäßen Zusammensetzung auch ausgewählt sein aus Sulfonsäuren, wie para-Toluolsulfonsäure, Methansulfonsäure, Trifluormethansulfonsäure und Campher(10)sulfonsäure.

In einer weiteren bevorzugten Ausführungsform in Verbindung mit einer der oben oder unten genannten Ausführungsformen ist die Säure in der erfindungsgemäßen Zusammensetzung in einer Menge von 1 bis 20 Gew.-%, besonders bevorzugt 2 bis 10 Gew.-%, insbesondere 4 bis 6 Gew.-%, bezogen auf die Gesamtzusammensetzung, enthalten.

Die erfindungsgemäße Zusammensetzung enthält mindestens einen Emulgator. Emulgatoren sind üblicherweise oberflächenaktive Stoffe, typischerweise mit hydrophilen Endgruppen. Typische Beispiele davon umfassen:
a) anionische Emulgatoren, d. h. Emulgatoren mit Carboxylat-, Sulfonat-, Sulfat-, Phosphat-, Polyphosphat-, Lactat-, Citrat-, Tartrat-, Glucose- oder Polyglucose-Endgruppen;
b) kationische Emulgatoren, d. h. Emulgatoren mit Aminsalz- oder quartären Ammonium-Endgruppen;
c) amphotere und zwitterionische Emulgatoren, d. h. Emulgatoren mit zwitterionischen Endgruppen oder Betain-Engruppen; sowie
d) nicht-ionische Emulgatoren, d. h. Emulgatoren mit Alkohol-, Polyether-, Glycerin-, Sorbit-, Pentaerythrit-, Glucose-, Saccharose-, Essigsäure und/oder Milchsäure-Resten in der Endgruppe.

Alle Emulgatoren beinhalten zudem lipophile Endgruppen, wie Alkyl- oder Alkenylreste, jeweils geradkettig, verzweigt oder cyclisch, sowie Aryl- oder Alkylaryreste. Weiterhin können hydrophile Seitengruppen, wie Hydroxyl-, Ester-, Sulfamid-, Amid-, Amin-, Polyamid-, Ether-, Polyether-, Glycerin-, Sorbit-, Pentaerytherit- oder Saccarosegruppen, enthalten sein.

In einer bevorzugten Ausführungsform in Verbindung mit einer der oben oder unten genannten Ausführungsformen ist der Emulgator ein nicht-ionischer Emulgator, besonders bevorzugt ein Polyethylen- oder Polypropylenglycol basierter Emulgator, z. B. PEG-40 Castor Oil oder PEG-40 hydrogenated Castor Oil (PHCO), und/oder ein Fettalkoholethoxylat oder -propoxylat, z. B. Cetearylalkohol, Ceteareth-12, und/oder ein Fettalkohol, z. B. Tetradecanol, Octadecanol, Hexyldecanol, und/oder ein Glycerinfettsäureester, z. B. Glycerylstearatmonoester bzw. -diester, und/oder ein zuckerbasierter Emulgator, z. B. Fettalkoholglucoside (C₈-C₁₆), α-, β- oder γ-Cyclodextrine (CD1, CD2, CD3), sowie methylierte oder acetylierte Derivate, ethoxylierte und/oder propoxylierte Alkyl(methyl)glucoseether, ethoxylierte Sorbitanfettsäurester (Polysorbate; z. B. PS20), N-Methylglucamid, oder Cocoamid DEA, oder Gemische daraus. Insbesondere ist der Emulgator in dem erfindungsgemäßen Gemisch ausgewählt aus PEG-40 Castor Oil oder PHCO, α-, β- oder γ-Cyclodextrinen, Glyceryloleat oder Decylglucosid (DG).

In einer bevorzugten Ausführungsform in Verbindung mit einer der oben oder unten genannten Ausführungsformen ist der Emulgator in mindestens 3 Gew.-%, bezogen auf die Gesamtzusammensetzung enthalten, besonders bevorzugt mindestens 5 Gew.-%, insbesondere 5 bis 20 Gew.-%.

In einer weiteren bevorzugten Ausführungsform in Verbindung mit einer der oben oder unten genannten Ausführungsformen umfasst die erfindungsgemäße Zusammensetzung 5 bis 70 Gew.-% Monoterpenoid, 1 bis 20 Gew.-% Säure, 2 bis 20 Gew.-% Emulgator und 10 bis 65 Gew.-% Wasser, besonders bevorzugt 5 bis 25 Gew.-% Monoterpenoid und 5 bis 15 Gew.-% Emulgator. Insbesondere enthält die erfindungsgemäße Zusammensetzung 25 bis 50 Gew.-% Citronellal oder Eucalyptus citriodora Öl, 4 bis 6 Gew.-% Säure, vorzugsweise Citronensäure, 5 bis 15 Gew.-% Emulgator, vorzugsweise 10 Gew.-% PEG-40 und 30 bis 40 Gew.-% Wasser, bezogen auf die Gesamtzusammensetzung.

Der pH-Wert der erfindungsgemäßen Zusammensetzung kann durch Zusatz von Basen erhöht werden. Übliche Basen sind z. B. NaOH, KOH, NaHCO₃ oder Na₂CO₃. In einer bevorzugten Ausführungsform in Verbindung mit einer der oben oder unten genannten Ausführungsformen wird der pH-Wert der Zusammensetzung durch Basenzusatz auf pH > 2 eingestellt. Besonders bevorzugt ist der pH-Wert der Zusammensetzung >2 und <8.

Durch den Zusatz von Base kann die Säure zum Teil neutralisiert werden und liegt in neutralisierter Form als entsprechendes Säuresalz vor. Die nicht neutralisierte Säure liegt weiterhin in freier Form vor.

Der Begriff "Säure" umfasst erfindungsgemäß sowohl die freie Säure als auch die neutralisierte Säure also das Säuresalz. Dabei kann die Säure auch nur als freie Säure oder nur als Säuresalz vorliegen. Die Begriffe "neutralisierte Säure", "Säuresalz" und "Säure in neutralisierter Form" werden gleichbedeutend verwendet. Die Begriffe "freie Säure" und "Säure in freier Form" werden ebenfalls gleichbedeutend verwendet.

Die erfindungsgemäße Zusammensetzung und das erfindungsgemäße Insektenabwehrmittel kann in Fertigprodukten, wie eine Emulsion, eine Dispersion, eine Lotion, eine Creme, ein Gel, ein Spray, eine Milch, ein Schaum, ein Mousse oder eine Lösung eingesetzt werden.

Zur Herstellung dieser Fertigprodukte können die allgemein üblichen Präparationsverfahren zum Einsatz kommen. Ebenso können dabei die üblichen Grundstoffe und Additive eingesetzt werden. Sie umfassen die üblicherweise verwendeten Lösungsmittel, Lösungsbeschleuniger, Emulgatoren, Lösungsmittler, Netzmittler, Antischaummittel, Salzbildner, Puffer, Gelbildner, Verdickungsmittel, Filmbildner, Bindemittel, Gleitmittel, Antiklebmittel, Fließregulierungsmittel, Feuchthalte- und Trockenmittel, Füllstoffe und Hilfsstoffe, wie Antioxidantien, Konservierungsmittel, Geruchskorrigentien und Färbemittel.

Der Begriff Emulsion umfasst alle dispersen Systeme aus zwei oder mehreren miteinander nicht mischbaren Flüssigkeiten, wobei die Emulsionspartner auch als feste Stoffe bei Raumtemperatur vorliegen können. Diese Emulsionen können Makro-, Mikro- oder Nanoemulsionen sein. Typischerweise werden Wasser-in-Öl- oder Öl-in-Wasser-Emulsionen oder Mischemulsionen wie Wasser-in-Öl-in-Wasser, oder Öl-in-Wasser-in-Öl verwendet.

Der Begriff Gele umfasst formbeständige, leicht deformierbare, an Flüssigkeiten reiche Systeme aus mindestens zwei Komponenten. Üblicherweise sind diese zwei Komponenten a) eine Flüssigkeit und b) ein fester, kolloidal verteilter Stoff, wie Gelatine, Kieselsäure, Montmorillonit, Bentonit, Polysaccharide, Polyacrylat und Pektine.

In einer bevorzugten Ausführungsform in Verbindung mit einer der oben oder unten genannten Ausführungsformen umfasst das erfindungsgemäße Fertigprodukt 0,5 bis 10 Gew.-% Emulgator, bezogen auf das gesamte Fertigprodukt. In einer besonders bevorzugten Ausführungsform umfasst das erfindungsgemäße Fertigprodukt 4 bis 8 Gew.-% Emulgator, bezogen auf das gesamte Fertigprodukt, in einer anderen besonders bevorzugten Ausführungsform umfasst das erfindungsgemäße Fertigprodukt 0,5 bis 3,0 Gew.-% Emulgator, bezogen auf das gesamte Fertigprodukt.

In einer weiteren bevorzugten Ausführungsform in Verbindung mit einer der oben oder unten genannten Ausführungsformen enthält das erfindungsgemäße Fertigprodukt 10 bis 50 Gew.-% der erfindungsgemäßen Zusammensetzung, besonders bevorzugt 10 bis 30 Gew.-%, bezogen auf das gesamte Fertigprodukt.

Der pH-Wert des Fertigprodukts kann durch Zusatz von Basen wie NaOH, KOH, NaHCO₃ oder Na₂CO₃ erhöht werden. In einer bevorzugten Ausführungsform in Verbindung mit einer der oben oder unten genannten Ausführungsformen wird der pH-Wert des Fertigprodukts durch Basenzusatz auf 4,5 bis 6,5, insbesondere 5,0 bis 6,0, eingestellt.

In einer bevorzugten Ausführungsform in Verbindung mit einer der oben oder unten genannten Ausführungsformen umfasst das erfindungsgemäße Fertigprodukt 0,1 bis 10 Gew.-% Säure, besonders bevorzugt 1 bis 6 Gew.-%, insbesondere 2 bis 5 Gew.-%, bezogen auf das gesamte Fertigprodukt. Vorzugsweise enthält das erfindungsgemäße Fertigprodukt 0,01 bis 6 Gew.-%, insbesondere 0,01 bis 5 Gew.-% freie Säure.

In einer weiteren bevorzugten Ausführungsform in Verbindung mit einer der oben oder unten genannten Ausführungsformen umfasst das erfindungsgemäße Fertigprodukt 0,5 bis 50 Gew.-% Monoterpenoid, 0,1 bis 10 Gew.-%, besonders bevorzugt 2 bis 5 Gew.-%, Säure, 0,2 bis 20 Gew.-%, besonders bevorzugt 6 bis 10 Gew.-%, Emulgator und 20 bis 99,3 Gew.-% Additiv, bezogen auf das gesamte Fertigprodukt.

In einer bevorzugten Ausführungsform in Verbindung mit einer der oben oder unten genannten Ausführungsformen wird das Fertigprodukt als Spray formuliert und enthält vorzugsweise 10 bis 25 Gew.-% Monoterpenoid, 0,1 bis 2 Gew.-%, besonders bevorzugt 0,2 bis 1,2 Gew.-%, Säure, 0 bis 4 Gew.-%, besonders bevorzugt 2 bis 4 Gew.-%, Cetearylalkohol, 0 bis 2 Gew.-%, besonders bevorzugt 1 bis 2 Gew.-%, Ceteareth-12, 0,5 bis 5 Gew.-% mindestens eines weiteren Emulgators, ggf. bis zu 8 Gew.-% Hautweichmacher (z. B. Paraffinöl), bis zu 5 Gew.-% Alkohol, bezogen auf das gesamte Fertigprodukt und optional Konservierungsmittel und Parfüm, sowie Rest Wasser. Der pH-Wert des Sprays wird durch Zusatz von KOH, NaOH oder NaHCO₃ auf 4,5 bis 6,5, besonders bevorzugt 5,0 bis 6,0 eingestellt.

In einer weiteren bevorzugten Ausführungsform in Verbindung mit einer der oben oder unten genannten Ausführungsformen wird das Fertigprodukt als Milch formuliert und enthält vorzugsweise 10 bis 25 Gew.-% Monoterpenoid, 0,1 bis 2 Gew.-%, besonders bevorzugt 0,2 bis 1,2 Gew.-%, Säure, 0 bis 4 Gew.-%, besonders bevorzugt 2 bis 4 Gew.-%, Cetearylalkohol, 0 bis 2 Gew.-%, besonders bevorzugt 1 bis 2 Gew.-%, Ceteareth-12, 0 bis 4 Gew.-% 2-Hexyldecanol, 0 bis 6 Gew.-% Glycerylmonostearat und -distearat, 0,5 bis 5 Gew.-% mindestens eines weiteren Emulgators, ggf. bis zu 8 Gew.-% Hautweichmacher (z. B. Paraffinöl), bis zu 5 Gew.-% Alkohol, bezogen auf das gesamte Fertigprodukt und optional Xanthan Gummi, Konservierungsmittel und Parfüm, sowie Rest Wasser. Der pH-Wert des Sprays wird durch Zusatz von KOH, NaOH oder NaHCO₃ auf 4,5 bis 6,5, besonders bevorzugt 5,0 bis 6,0 eingestellt.

Das erfindungsgemäße Verfahren zur Herstellung der erfindungsgemäßen Zusammensetzung umfasst das Vermischen der Bestandteile. In einer bevorzugten Ausführungsform in Verbindung mit einer der oben oder unten genannten Ausführungsformen wird das Verfahren als Ein-Topf-Verfahren durchgeführt, d. h. die Bestandteile werden alle miteinander vermischt und direkt umgesetzt.

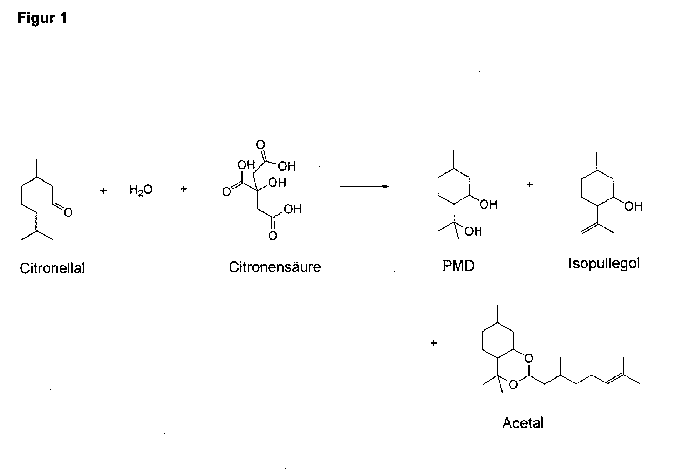

Unter den Reaktionsbedingungen des erfindungsgemäßen Verfahrens findet eine Hydratisierung des Monoterpenoids statt. Unter Hydratisierung ist hier jener Vorgang zu verstehen, der durch chemische Reaktion und kovalent erfolgende Bindung von H und OH aus Wasser an zwei benachbarte Atome erfolgt und mit Hydratation (Solvatation in Wasser als Lösungsmittel) nicht verwechselt werden darf. Die Hydratisierung ist beispielhaft an Citronellal in Figur 1 gezeigt.

Die Hydratisierung erfolgt in Gegenwart von Säure als Katalysator. Dabei werden im erfindungsgemäßen Verfahren als Säuren vorzugsweise die oben genannten Säuren verwendet. Aus toxikologischen und dermatologischen Gründen sind Citronensäure, Milchsäure, Sorbinsäure, Ascorbinsäure, Salicylsäure, Äpfelsäure und Weinsäure bevorzugt.

Überraschenderweise wird nach dem erfindungsgemäßen Verfahren als Hauptprodukt cis- und trans-PMD erhalten und nur eine geringe Menge an Acetalen als Nebenprodukt. Des weiteren findet ein vollständiger Umsatz des Monoterpenoids statt.

Die nach dem erfindungsgemäßen Verfahren erhaltene Zusammensetzung enthält vorzugsweise weniger als 5 Gew.-% Acetale, besonders bevorzugt weniger als 3 Gew.-%, insbesondere weniger als 2 Gew.-%, bezogen auf die Gesamtzusammensetzung.

In einer bevorzugten Ausführungsform in Verbindung mit einer der oben oder unten genannten Ausführungsformen findet das Vermischen bei einer Temperatur von 20 bis 145 °C statt, besonders bevorzugt bei 60 bis 95 °C.

Findet das Vermischen bei Temperaturen oberhalb des Siedepunkts des verwendeten Lösungsmittels statt, wird dies in einem geschlossenen Gefäß unter Druck durchgeführt. Dabei kann die Exothermie der Reaktion zur Aufrechterhaltung der Temperatur verwendet werden.

In einer weiteren bevorzugten Ausführungsform in Verbindung mit einer der oben oder unten genannten Ausführungsformen beträgt die Reaktionsdauer 0,5 bis 6 h, besonders bevorzugt 1 bis 5 h, insbesondere 2 bis 4 h.

Ferner kann durch Auswahl der Reaktionsbedingungen im erfindungsgemäßen Verfahren das Verhältnis von cis-PMD zu trans-PMD gesteuert werden. So wird bei niedrigeren Temperaturen bevorzugt das cis-Isomer gebildet. Ebenfalls kann die Acetalbildung durch Wahl der Reaktionsbedingungen gesteuert werden. So werden bei höheren Temperaturen vermehrt Acetale gebildet.

Das erfindungsgemäße Verfahren ermöglicht somit eine vereinfachte Umsetzung von Monoterpenoiden in einer Ein-Topf-Reaktion, wobei die Zusammensetzung der gebildeten Reaktionsprodukte durch Wahl der Reaktionsbedingungen und der verwendeten Edukte, wie z. B. Emulgatoren oder Säuren, gesteuert und kontrolliert werden kann.

Im folgenden wird die Erfindung anhand von Beispielen erläutert.

### Beispiele

### Beispiel 1:

Ein-Topf-Verfahren zur Umsetzung von Citronellal:

Die in den jeweiligen Tabellen angeführten Einwaagen wurden in ein geeignetes Gefäß eingewogen und unter Rühren und bei den angeführten Temperaturen umgesetzt. Zur Verfolgung der Umsetzung wurden zu definierten Zeitpunkten vernachlässigbare Teile der Reaktionslösung entnommen und mittels interner Standardmethode mittels GC-FID bzw. GC-MS analysiert.

Unter den Reaktionsbedingungen wird Citronellal zu PMD, Isopulegolen und Acetalen umgesetzt.

**Tabelle 1: Übersicht der Temperatur und verwendeten Einwaagen in Gramm für Reaktionsansatz 1.**

| | **Ansatz 1 T = 60 °C** |
|---|---|
| | **Einwaage [g]** |
| Citronellal | 101,15 |
| Citronensäuremonohydrat | 10,01 |
| PHCO | 20,24 |
| Wasser | 71,18 |
| | 202,58 |

**Tabelle 2: Übersicht der Temperatur und verwendeten Einwaagen in Gramm für Reaktionsansatz 2.**

| | **Ansatz 2 T = 72 °C** |
|---|---|
| | **Einwaage [g]** |
| Citronellal | 100,13 |
| Citronensäuremonohydrat | 10,05 |
| PHCO | 20,07 |
| Wasser | 70,68 |
| | 200,93 |

**Tabelle 3: Übersicht der Temperatur und verwendeten Einwaagen in Gramm für Reaktionsansatz 3.**

| | **Ansatz 3 T = 90 °C** |
|---|---|
| | **Einwaage [g]** |
| Citronellal | 100,72 |
| Citronensäuremonohydrat | 10,01 |
| PHCO | 21,50 |
| Wasser | 70,00 |
| | 202,23 |

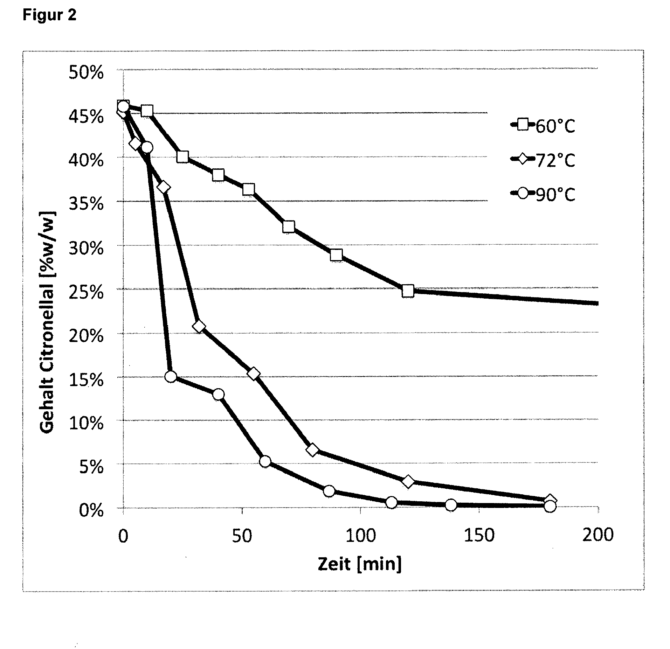

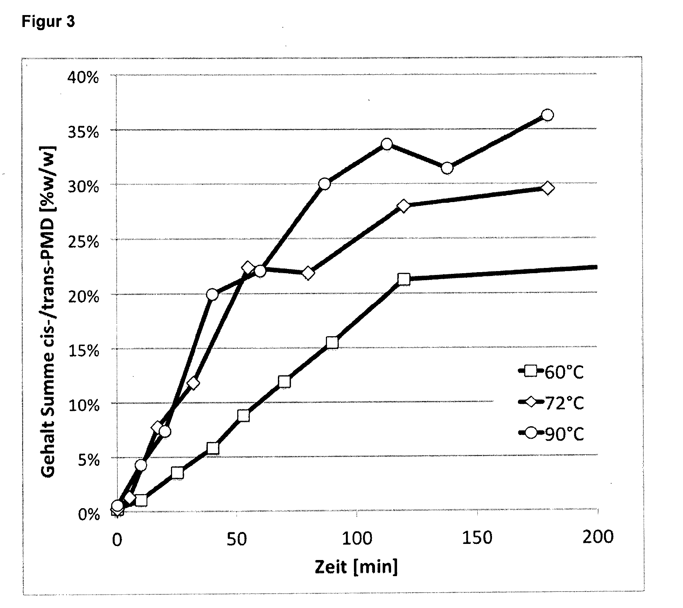

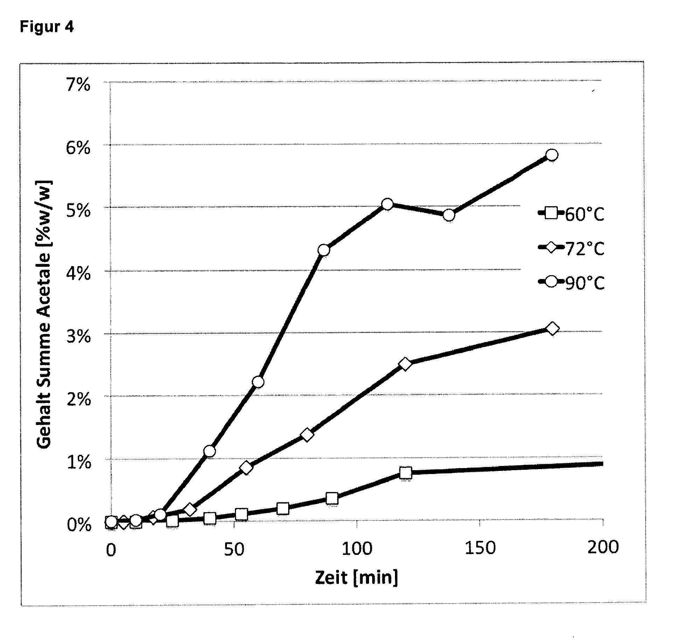

Figur 2 zeigt die Umsetzung bei verschiedenen Temperaturen, Figur 3 zeigt den Konzentrationsverlauf der Bildung von cis-/trans-PMD und Figur 4 zeigt den Konzentrationsverlauf der gebildeten Acetale.

Wie aus Figuren 2 bis 4 erkennbar, wird bei der erfindungsgemäßen Umsetzung Citronellal zu PMD und Acetalen umgesetzt.

### Beispiel 2:

Ein-Topf-Verfahren zur Umsetzung von Eucalyptus citriodora Öl (E. Citriodora Öl):

Entsprechend den Ansätzen 1 bis 3 wurde die Umsetzung mit Eucalyptus citriodora Öl bei 72 °C durchgeführt (Ansatz 4).

**Tabelle 4: Übersicht der Temperatur und verwendeten Einwaagen in Gramm für Reaktionsansatz 4.**

| | **Ansatz 4 T = 72 °C** |
|---|---|
| | **Einwaage [g]** |
| E. Citriodora Öl | 100,44 |
| Citronensäuremonohydrat | 10,03 |
| PHCO | 20,26 |
| Wasser | 70,02 |
| | 200,75 |

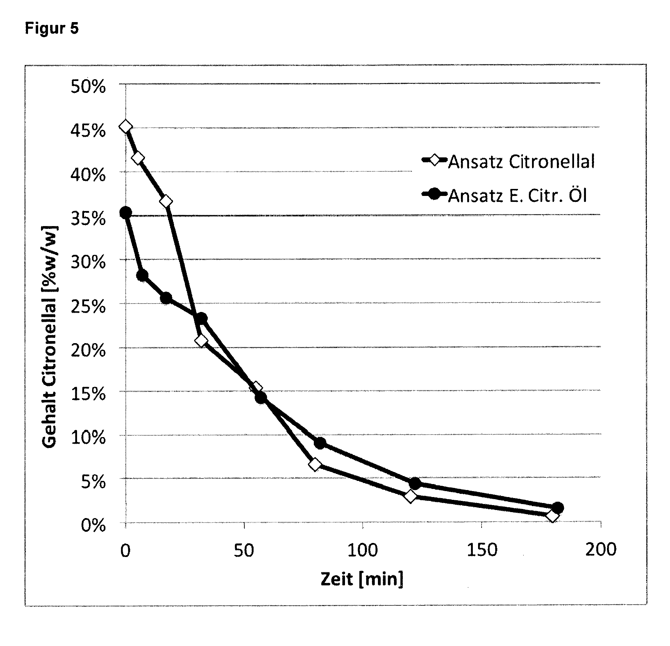

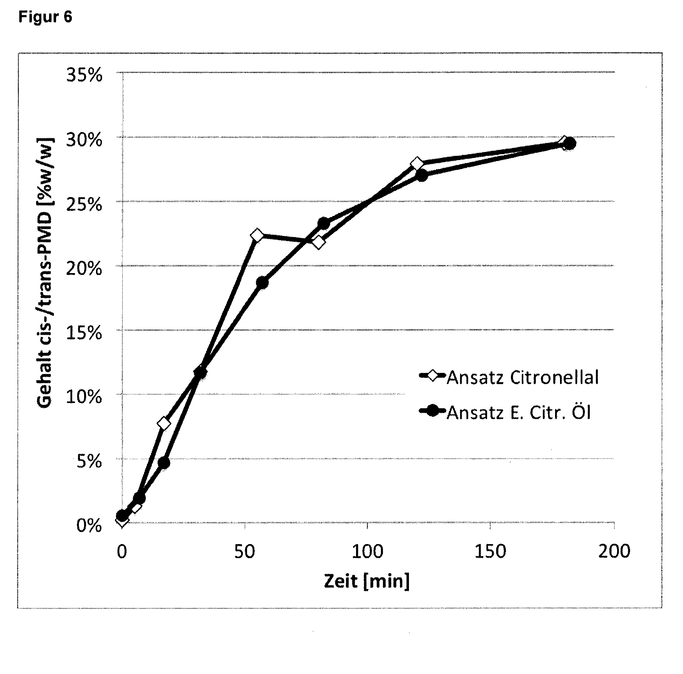

Figuren 5 und 6 zeigen eine praktisch identische Abnahme von Citronellal (Figur 5) und Zunahme der Summe aus cis- und trans-PMD (Figur 6) für die Umsetzung von E. Citriodora Öl im Vergleich zu Citronellal bei 72 °C.

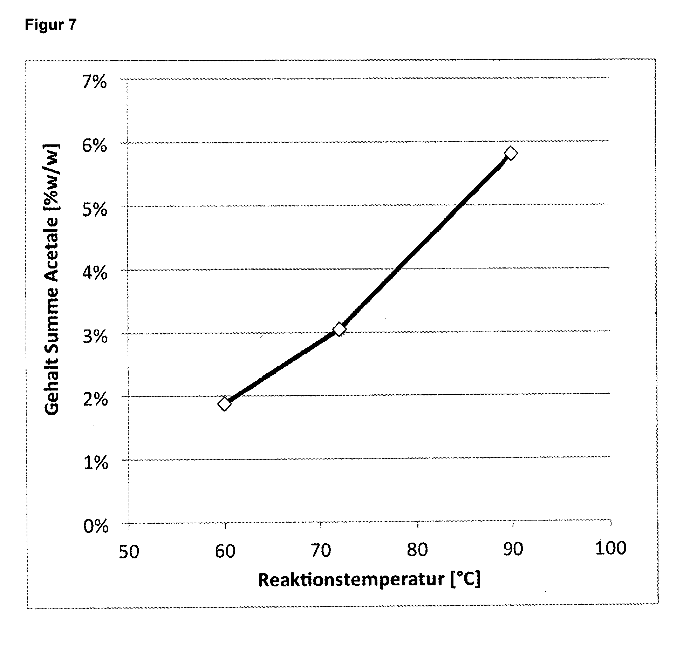

Des weiteren wurde eine Steigerung des Acetalgehalts bei einer Steigerung der Temperatur gefunden. Figur 7 zeigt die Temperaturabhängigkeit der Bildung der Acetale.

### Beispiel 3:

### Umsetzung von E. Citriodora Öl mit unterschiedlichen Säuren:

Wie in Beispiel 1 beschrieben wurden die in den jeweiligen Tabellen angeführten Einwaagen in ein geeignetes Gefäß eingewogen und unter Rühren und bei den angeführten Temperaturen umgesetzt und analysiert.

Die Untersuchung der Anwendung unterschiedlicher organischer Säuren wurde wie in Tabellen 5 und 6 durchgeführt.

Hier wurden Oxal-, Malein- und Adipinsäure als Dicarbonsäuren, sowie Salicyl-, Wein- und Citronensäure als Hydroxycarbonsäuren und Ascorbinsäure als Vertreter von vinylogen Carbonsäuren ausgewählt.

Um ein Vergleichbarkeit der Ergebnisse zu gewährleisten, wurden die Einwaagen so gewählt, dass jeweils ein konstantes molares Verhältnis zwischen den zur Reaktion zur Verfügung stehenden Protonen zu Eucalyptus citriodora Öl (E.C. Öl, Aldehyd) (etwa 1:10), sowie ein konstantes Verhältnis von Aldehyd zu Wasser (etwa 1:6) gewährleistet ist, und der Emulgator bei etwa 10 Gew.-% liegt.

**Tabelle 5: Übersicht der Temperatur und verwendeten Einwaagen in Gramm für die Reaktionsansätze 5 - 8.**

| **Ansatz** | **5** | **6** | **7** | **8** |
|---|---|---|---|---|
| **Säure** | **Citronensäure** | **Weinsäure** | **Oxalsäure** | **Maleinsäure** |
| **Temp.** | **90°C** | **90°C** | **90°C** | **90°C** |
| E.C. Öl | 100,08 | 126,08 | 100,19 | 100,23 |
| Säure | 10,00 | 12,61 | 9,01 | 8,28 |
| PHCO | 19,99 | 25,22 | 21,94 | 21,26 |
| Wasser | 72,00 | 88,99 | 72,81 | 70,76 |
| Summe | 202,07 | 252,9 | 203,95 | 200,53 |
| Säure : Aldehyd (Molverhältnis) | 0,103 | 0,103 | 0,110 | 0,110 |
| Wasser: Aldehyd (Molverhältnis) | 6,16 | 6,04 | 6,22 | 6,04 |

**Tabelle 6: Übersicht der Temperatur und verwendeten Einwaagen in Gramm für die Reaktionsansätze 9 - 11.**

| **Ansatz** | **9** | **10** | **11** |
|---|---|---|---|
| **Säure** | **Adipinsäure** | **Ascorbinsäure** | **Salicylsäure** |
| **Temp.** | **90°C** | **90°C** | **90°C** |
| E.C. Öl. | 100,02 | 75,52 | 75,45 |
| Säure | 10,45 | 9,52 | 7,40 |
| PHCO | 21,07 | 15,55 | 15,09 |
| Wasser | 71,94 | 52,90 | 52,78 |
| Summe | 203,48 | 153,49 | 150,72 |
| Säure : Aldehyd (Molverhältnis) | 0,110 | 0,110 | 0,110 |
| Wasser: Aldehyd (Molverhältnis) | 6,16 | 6,00 | 5,99 |

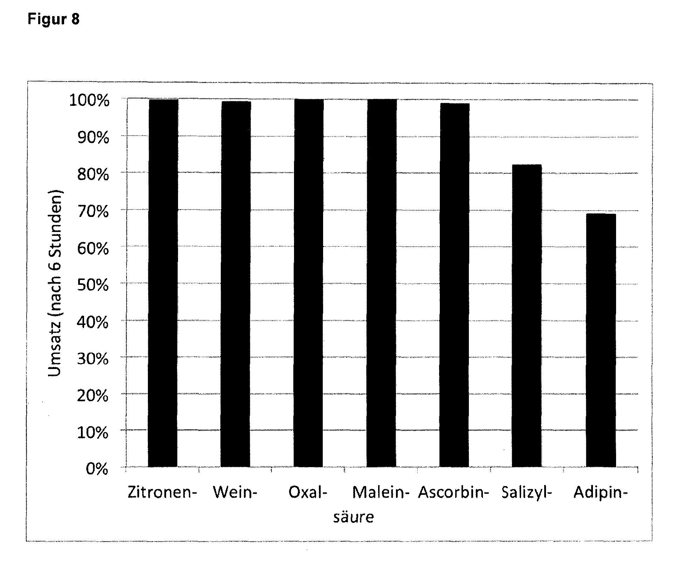

Figur 8 zeigt die erzielten Umsätze nach 6 Stunden Reaktionsdauer. Überraschenderweise ist der Umsatz nicht von der Säurestärke (pKa-Wert) determiniert. So zeigte beispielsweise Ascorbinsäure (pKa=4,37) noch praktisch vollständige Konversion des Citronellal, während Salicylsäure (pKa=2,75) und Adipinsäure (pKa=4,43) keinen vollständigen Umsatz nach 6 Stunden zeigten.

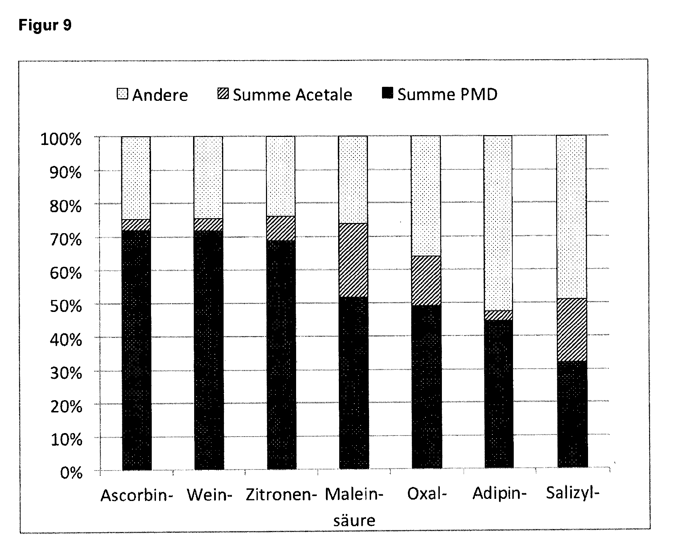

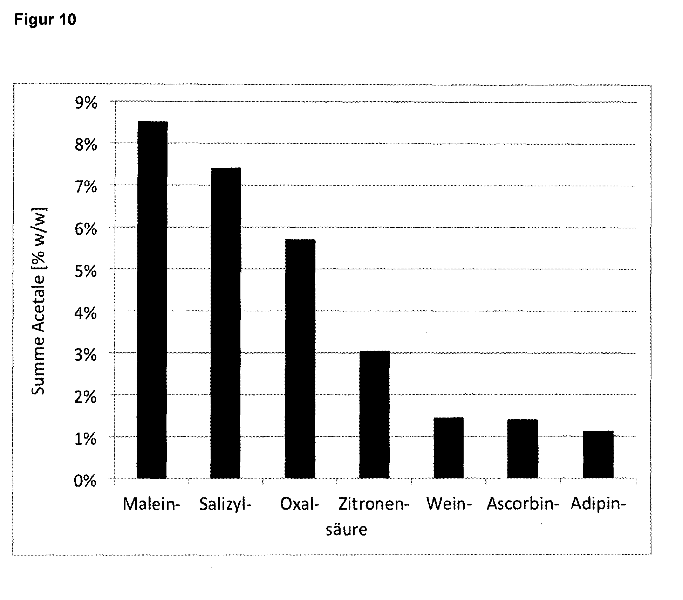

Betrachtet man die Zusammensetzung der Reaktionsprodukte (normiert auf die E. Citriodora Öl basierte, organische Phase), so zeigt sich überraschenderweise auch kein einheitliches Bild. Figur 9 zeigt die Anteile an Summe PMD, Summe Acetalen sowie den restlichen terpenartigen Bestandteilen (Isopulegole, Citronellal, Citronellol, etc.). Emulgatoren und Säuren wurden nicht berücksichtigt, da sich diese in der wässrigen Phase befinden. Dies tritt insbesondere beim Vergleich der Dicarbonsäuren und Hydroxycarbonsäuren zu Tage. Dies gilt insbesondere für die Entstehung der Acetale im Reaktionsgemisch, wie in Figur 10 gezeigt. Damit ist der Gehalt an Acetal nicht nur wie bereits zuvor gezeigt durch die Temperatur und die Mengenverhältnisse von Säure : Wasser: Aldehyd steuerbar, sondern auch durch die verwendete Säure.

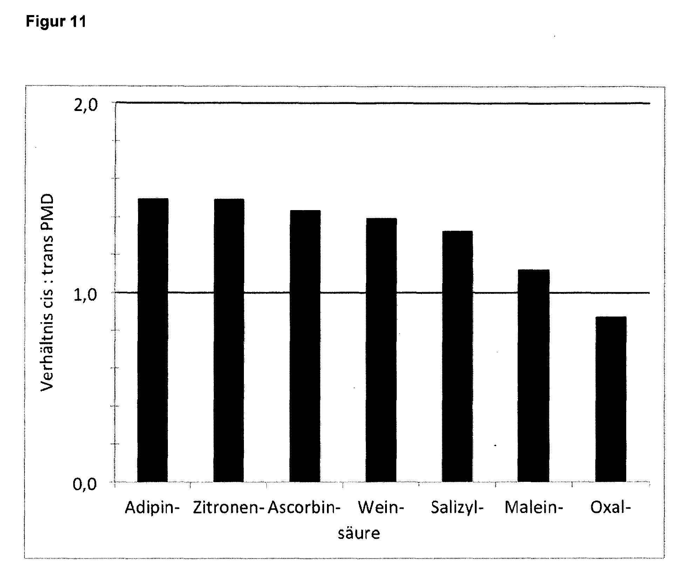

Betrachtet man die Zusammensetzung des entstandenen PMD im Detail, so zeigt sich überraschenderweise, dass sich in Abhängigkeit der verwendeten Säure, das Verhältnis von cis- zu trans-PMD in einem Bereich von 1,5 bis 0,88 deutlich unterscheidet, und durch die verwendete Säure gesteuert werden kann (Figur 11).

### Beispiel 4:

Umsetzung von E. Citriodora Öl mit unterschiedlichen Emulgatoren:

Wie in Beispiel 1 beschrieben wurden die in den jeweiligen Tabellen angeführten Einwaagen in ein geeignetes Gefäß eingewogen und unter Rühren und bei den angeführten Temperaturen umgesetzt und analysiert.

Die Untersuchung der Anwendung unterschiedlicher Emulgatoren wurde wie in Tabelle 7 durchgeführt.

**Tabelle 7: Übersicht der Temperatur und verwendeten Einwaagen in Gramm für die Reaktionsansätze 12 - 16.**

| **Ansatz** | **12** | **13** | **14** | **15** | **16** |
|---|---|---|---|---|---|
| **Emulgator** | **DG** | **PS20** | **CD1** | **CD2** | **CD3** |
| **Temp.** | **90°C** | **90°C** | **90°C** | **90°C** | **90°C** |
| E.C. Öl | 100,51 | 100,52 | 102,38 | 100,79 | 100,54 |
| Citronensäure H₂O | 10,08 | 10,03 | 10,12 | 10,01 | 10,08 |
| Emulgator | 20,12 | 20,20 | 18,95 | 22,06 | 25,24 |
| Wasser | 70,22 | 70,36 | 77,40 | 75,95 | 78,27 |
| Summe | 200,93 | 201,11 | 208,85 | 208,81 | 214,13 |
| Säure: Aldehyd (Molverhältnis) | 0,221 | 0,220 | 0,218 | 0,219 | 0,221 |
| Wasser: Aldehyd (Molverhältnis) | 5,98 | 5,99 | 6,47 | 6,45 | 6,66 |

Auch hier zeigte sich ein überraschenderweise, dass die Zusammensetzung der Reaktionsprodukte auch deutlich vom Typ des verwendeten Emulgator abhängt, jedoch nicht der Umsatz (Alle Ansätze setzten praktisch vollständig um).

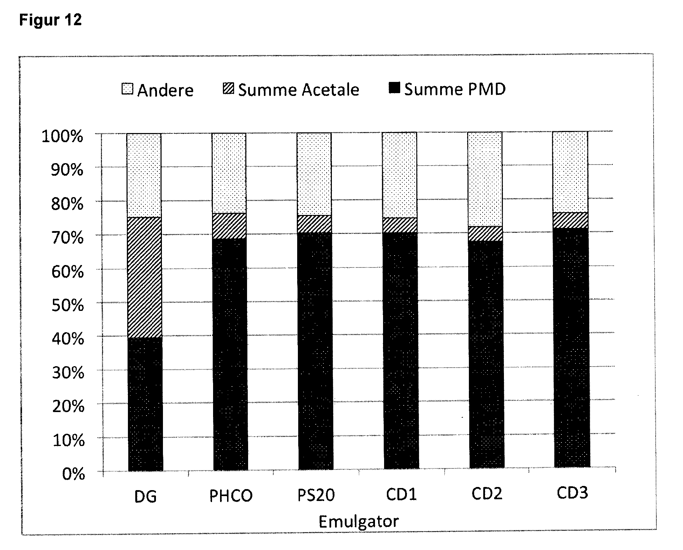

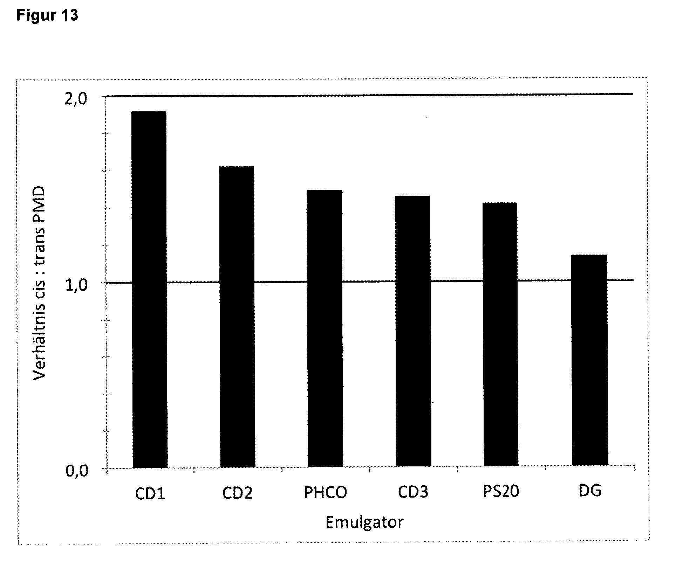

Wie in Figur 12 dargestellt, hängt die Verteilung der Reaktionsprodukte (normiert auf die E. Citriodora Öl basierte, organische Phase) noch deutlicher als bei den unterschiedlichen Säuren vom verwendeten Emulgator ab. Insbesondere im Falle von Decylglucosid beträgt der Anteil an gebildeten Acetale mehr als 35 Gew.-%. Ebenso überraschend ist auch hier die Variation der Verhältnisse von cis- zu trans-PMD, wie in Figur 13 aufgezeigt. Die Verhältnisse von cis- zu trans-PMD variieren von 1,9, bei Verwendung von α-Cyclodextrin, bis 1,1 bei der Verwendung von Decylglucosid.

### Beispiel 5:

Ein-Topf-Verfahren zur direkten Umsetzung einer Fertigformulierung:

Wie in Beispiel 1 beschrieben wurden die in den jeweiligen Tabellen angeführten Einwaagen in ein geeignetes Gefäß eingewogen und unter Rühren und bei den angeführten Temperaturen umgesetzt und analysiert.

**Tabelle 8: Übersicht der Temperatur und verwendeten Einwaagen in Gramm für die Reaktionsansätze 17 - 20.**

| **Ansatz** | **17** | **18** | **19** | **20** |
|---|---|---|---|---|
| **Temp.** | **90°C** | **80°C** | **95°C** | **90°C** |
| E.C. Öl | - | 50,14 | - | 100,11 |
| Citronellal | 50,14 | - | 50,38 | - |
| Citronensäure | 5,04 | 4,99 | 5,00 | 9,99 |
| PHCO | 10,20 | 10,18 | 10,02 | - |
| Cetearyl Alkohol | 7,50 | 7,49 | 7,52 | - |
| Ceteareth-12 | 3,84 | 3,75 | 3,75 | - |
| Weisöl | 16,31 | 16,26 | 7,55 | 6,01 |
| Glycerinoleat | - | - | - | 12,08 |
| 2-Propanol | - | - | 5,00 | - |
| n-Butanol | - | 3,93 | 3,93 | - |
| Glycerin | - | - | - | 6,00 |
| Magnesiumsulfat | - | - | - | 1,00 |
| Wasser | 133,33 | 132,15 | 132,38 | 64,06 |
| Summe | 226,36 | 228,89 | 225,53 | 199,25 |
| Säure : Aldehyd (Molverhältnis) | 0,22 | 0,22 | 0,22 | 0,22 |
| Wasser: Aldehyd (Molverhältnis) | 22,76 | 22,56 | 22,49 | 5,48 |
| Zeit [min] | 240 | 240 | 210 | 180 |

Überraschenderweise zeigten alle in Tabelle 8 angeführten Ansätze praktisch vollständigen Umsatz nach den angegebenen Zeiten. Ein Vergleich mit gemäß kosmetischer Arbeitsweise hergestellten Formulierungen in diesen Zusammensetzungen, jedoch ausgehend von einem zuvor hergestellten Wirkstoffkonzentrat, zeigte praktisch keinen Unterschied zu den im Ein-Topf-Verfahren hergestellten - ebenso wenig Unterschied beim Vergleich der GC-FID und GC-MS Analysen und im Anwendungstest.

**Tabelle 9 zeigt die Verteilung der Zusammensetzung der einzelnen Wirkstoffkomponenten:**

| **Ansatz** | **17** | **18** | **19** | **20** |
|---|---|---|---|---|
| cis-/trans-PMD | 17,6% | 12,0% | 15,6% | 26,9% |
| Acetale | 0,5% | 0,7% | 0,6% | 3,1% |
| andere Terpene | 3,9% | 3,9% | 3,8% | 11,0% |
| Wirkstoffgehalt | 22,0% | 16,6% | 20,0% | 40,9% |
| cis:trans PMD | 1,41 | 1,49 | 1,39 | 1,33 |

## Patentansprüche

1. Zusammensetzung, umfassend mindestens ein Monoterpenoid, mindestens eine Säure und mindestens einen Emulgator, wobei der Emulgator in mindestens 2 Gew.-%, bezogen auf die Gesamtzusammensetzung, enthalten ist.

2. Zusammensetzung nach Anspruch 1, wobei das Monoterpenoid Citronellal, ein para-Menthenol oder ein Isomer davon ist.

3. Zusammensetzung nach Anspruch 2, wobei das para-Menthenol, Isopulegol, hydratisiertes Isopulegol, hydratisiertes Citronellal oder ein p-Menthan-3,8-diol ist.

4. Zusammensetzung nach einem der Ansprüche 1 bis 3, wobei die Säure eine Carbonsäure ist.

5. Zusammensetzung nach Anspruch 4, wobei die Carbonsäure eine C₁-C₆ Carbonsäure ist.

6. Zusammensetzung nach Anspruch 4 oder 5, wobei die Carbonsäure eine Hydroxycarbonsäure, vorzugsweise eine α-Hydroxycarbonsäure, ist.

7. Zusammensetzung nach einem der Ansprüche 4 bis 6, wobei die Carbonsäure eine Dicarbonsäure oder Tricarbonsäure ist.

8. Zusammensetzung nach einem der Ansprüche 4, 6 oder 7, wobei die Carbonsäure Citronensäure, Milchsäure oder Weinsäure ist.

9. Zusammensetzung nach einem der Ansprüche 1 bis 8, wobei der Emulgator ein nicht-ionischer Emulgator ist, vorzugsweise ausgewählt aus Polyethylenglycolen, Polypropylenglycolen, Fettalkoholethoxylaten, Fettalkoholpropoxylaten, Fettalkoholen, Glycerinfettsäureestern, zuckerbasierte Emulgatoren oder Gemischen daraus.

10. Zusammensetzung nach einem der Ansprüche 1 bis 9, umfassend 5 bis 70 Gew.-% Monoterpenoid, 1 bis 10 Gew.-% Säure, 2 bis 20 Gew.-% Emulgator und 10 bis 65 Gew.-% Wasser.

11. Insektenabwehrmittel, umfassend eine Zusammensetzung nach einem der Ansprüche 1 bis 10.

12. Fertigprodukt, umfassend die Zusammensetzung nach einem der Ansprüche 1 bis 10 und mindestens ein Additiv, vorzugsweise umfassend 0,5 bis 50 Gew.-% Monoterpenoid, 0,1 bis 10 Gew.-% Säure, 0,2 bis 20 Gew.-% Emulgator und 20 bis 99,2 Gew.-% Additiv, bezogen auf das gesamte Fertigprodukt.

13. Verfahren zur Herstellung einer Zusammensetzung nach einem der Ansprüche 1 bis 10, umfassend das Vermischen der Bestandteile.

14. Verfahren nach Anspruch 13, wobei das Vermischen bei einer Temperatur von 20 bis 100 °C erfolgt.

15. Verwendung der Zusammensetzung nach einem der Ansprüche 1 bis 10 als Insektenabwehrmittel.
